Europäisches Patentamt

European Patent Office

Office européen des brevets

(19)

(11) Publication number: **0 109 140**
**B1**

# EUROPEAN PATENT SPECIFICATION

(12)

(45) Date of publication of patent specification: **02.11.88**

(51) Int. Cl.⁴: **G 10 L 9/00**

(21) Application number: **83304074.4**

(22) Date of filing: **13.07.83**

(54) Recognition of continuous speech.

(30) Priority: **19.10.82 JP 184233/82**

(43) Date of publication of application:
**23.05.84 Bulletin 84/21**

(45) Publication of the grant of the patent:
**02.11.88 Bulletin 88/44**

(84) Designated Contracting States:
**DE FR GB IT NL**

(56) References cited:
ELECTRONICS AND COMMUNICATIONS IN
JAPAN, vol. 46, no. 11, November 1963, pages
246-256, Tokyo, JP., J. SUZUKI et al.:
"Phonemic classification and recognition of
Japanese monosyllables"
ICASSP 80 PROCEEDINGS-IEEE
INTERNATIONAL CONFERENCE ON
ACOUSTICS, SPEECH & SIGNAL PROCESSING,
Denver, 9th-11th April 1980, vol. 3, pages
876-879, IEEE, New York, USA, R. DE MORI et
al.: "A parser for segmenting continuous
speech into pseudo-syllabic nuclei"

(73) Proprietor: COMPUTER BASIC TECHNOLOGY
RESEARCH ASSOCIATION
4-28 Mita 1-chome Minato-ku
Tokyo (JP)

(72) Inventor: **Tanaka, Atsuo**
4-2-36 Kikyogaoka
Nabari-shi Mie-ken (JP)
Inventor: **Ueda, Toru**
492 Minosho-cho
Yamatokoriyama-shi Nara-ken (JP)

(74) Representative: **Wright, Peter David John et al**
R.G.C. Jenkins & Co. 26 Caxton Street
London SW1H 0RJ (GB)

(58) References cited:

IEEE TRANSACTIONS ON ACOUSTICS, SPEECH AND SIGNAL PROCESSING, vol. ASSP-26, no. 5, October 1978, pages 409-418, New York, USA, D.H. JOHNSON et al.: "A phrase recognizer using syllable-based acoustic measurements"

IEEE TRANSACTIONS ON ELECTRONIC COMPUTERS, vol. EC-12, no. 5, December 1963, pages 835-846, New York, USA, T. SAKAI et al.: "The automatic speech recognition system for conversational sound"

PROCEEDINGS OF THE 4TH INTERNATIONAL JOINT CONFERENCE ON PATTERN RECOGNITION, Kyoto, 7th-10th November 1978, pages 1009-1011, IEEE, New York, USA, R. NAKATSU et al.: "Speech recognition of connected words"

# 0 109 140

## Description

The present invention relates to a method of, and a system for speech recognition by extracting and recognizing syllable parts from continuously produced speech.

Known syllable speech recognition systems mainly extracts syllable parts for pattern matching only from simple information such as power levels. Since the speech recognition performance is largely affected by the accuracy of the extraction of syllable parts, high performance speech recognition cannot be expected using the simple syllable part extraction method. The simple extraction process is unable to extract syllable parts correctly from the information with external noise superimposed.

When syllables are produced at a certain speed or higher (three syllables per second or higher, for example), the syllables are liable to be run together and continuous.

It is an object of the present invention to provide a speech recognition system which will eliminate the foregoing difficulties by classifying segments (hereinafter referred to as "frames") of speech having a certain time interval (in the range of from units of milliseconds to tens of milliseconds) according to phonemic features (such as voiced and voiceless sounds and nasals) and extracting syllable parts using the classified frames.

In the article by R. Nakatsu et al entitled "Speech Recognition Of Connected Words" from the Proceedings of the Fourth International Joint Conference on Pattern recognition Kyoto, November 1978 there is disclosed a system in which input speech is divided into frames. As a step towards segmentation of the speech, phoneme boundary detection is then performed. The principal indicators used to detect a phoneme boundary are information on speech power and spectral change. However, the prior art document does disclose the classification according to phonemic features of some frames in vowel parts of the input speech, because phoneme boundaries between adjacent vowels is said to be difficult to detect. A sudden change in the vowel symbol sequence is interpreted as a phoneme boundary. The phoneme segments defined by these phoneme boundaries are classified as vowel or consonant (or unclassified). The segmentation of the word into syllables is then performed by placing syllable boundaries at the centre of each vowel (or unclassified) phoneme. Presumably this is done to ensure that each syllable begins and ends with a vowel part since the basic syllable structure used in the system of this prior art document is the VCV syllable.

In the article by J. Suzuki et al entitled "Phonemic Classification and Recognition of Japanese Monosyllables" from Electronics and Communications in Japan, Volume 46, No. 11, November 1963, pages 246—256, Tokyo, there is disclosed a system for the recognition of separately spoken monosyllables. The problem of recognition of plural-syllable words in continuous speech is not addressed, as the system of this prior art document relies on the fact that partition into syllable units has already been done.

According to the present invention, there is provided a method of speech recognition in which:

an input word comprising two or more syllables is divided into a series of frames having a predetermined frame interval;

frames from the input word are classified according to phonemic features;

the input word is divided into syllables by use, at least in part, of the said classification of frames according to phonemic features; and

speech waveform features patterns for the syllables of the input word are compared with stored patterns for syllables in order to match the said syllables of the input word thereby to recognise the input word,

characterised in that

in the said classification, frames from both vowel parts and consonant parts of the input word are classified, and are given classifications selected from classifications relating to both vowels and consonants,

and in that the said syllables into which the input word is divided are CV syllables which each comprise one consonant and one vowel.

According to the present invention there is also provided a speech recognition system, comprising means for dividing an input spoken word into frames having a predetermined frame interval,

means for classifying frames from the input word according the phonemic features,

means for dividing the input word into syllables by use, at least in part, of the said classification of frames according to phonemic features, and

means for comparing speech waveform feature patterns for the syllables of the input word with stored patterns for syllables in order to match the said syllables of the input thereby to recognise the input spoken word,

characterised in that

said means for classifying is adapted to classify frames from both vowel parts and consonant parts of the input word, and to give said frames classification selected from classifications relating to both vowels and consonants,

and in that

the said syllables into which the input word is divided are CV syllables which each comprise one consonant and one vowel.

3

An embodiment of the present invention, given by way of non-limitative example, will now be described with reference to the accompanying drawings, in which:

Fig. 1 is a diagram showing speech sounds expressed as a series of phonemically classified symbols;

Fig. 2 is a block diagram of a speech recognition system embodying the present invention;

Fig. 3 is a flowchart illustrative of operations of syllable part extraction embodying the present invention; and

Fig. 4 is a diagram showing a series of phonemically classified symbols for the utterance "Denyakuki" (the English equivalent of which is an "electronic translator").

According to the embodiment of the invention, segments (hereinafter referred to as "frames") of speech having a certain time interval (in the range of from units of milliseconds to tens of milliseconds) are classified according to phonemic features (such as voiced and voiceless sounds and nasals), and syllable parts are extracted using the classified frames.

More specifically, each speech frame is first classified according to phonemic features so as to be expressed by symbols (such as ·, B, N, M, for example), a process hereinafter referred to as "phonemic classification".

The phonemic properties as expressed by the symbols are set forth in the following Table 1:

TABLE 1

| Symbol | Property |
|--------|----------|
| · | Voiceless part |
| B | Buzz-bar part |
| N | Nasal part |
| M | Sound between nasal and vowel and vowel part of small power |
| V | Vowel part |
| F | Fricative part |
| C | Weak voiceless part |

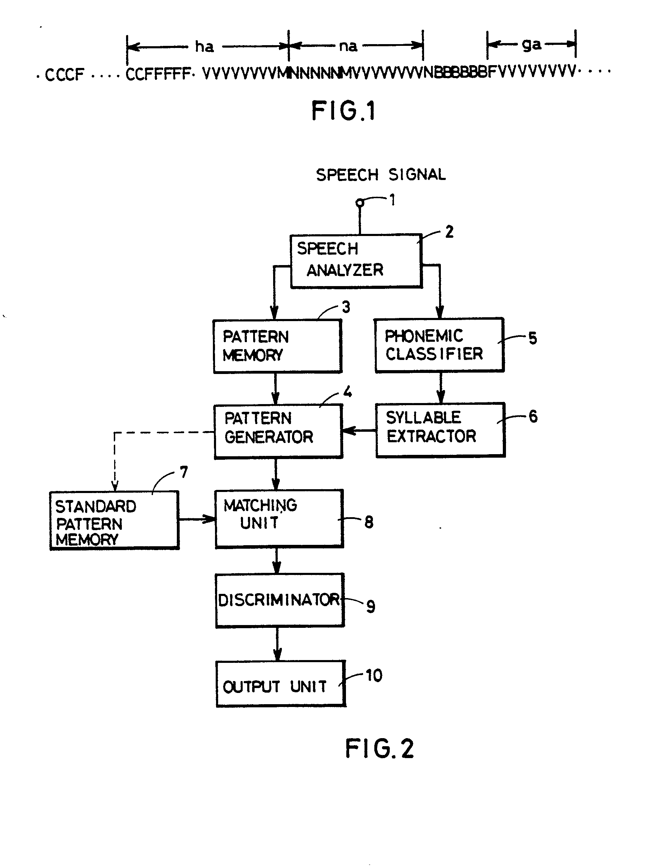

Fig. 1 is illustrative of a series of phonemically classified symbols expressing an utterance/hanaga/. There are four frames of voiceless part in front of /ha/. Since this voiceless part is followed by four unvoiced frames, the voiceless part is regarded as noise and excluded from the extraction of the voiced sound. The consonant part in the front half of /ha/ is composed of fricative frames, and there is one unvoiced frame in a transient zone to the vowel part. The front fricative part and the rear vowel part, including the one voiceless zone, are regarded together as a syllable part.

Generally, a few unvoiced frames appear in many instances after the plosive part of a voiceless stop. In such an instance, it is necessary to extract the plosive part including the unvoiced part and the vowel part as a syllable part. The syllable part /na/ is extracted as the part from the first nasal symbol N to the vowel part.

A vocal sound consisting only of low-frequency components known as a buzz-bar part is frequently detected prior to the plosive part of a voiced plosive. Such a vocal sound is identified by successive symbols B and the frames of the symbols B are not treated as a spoken period. The syllable part /ga/ is extracted by excluding the frames B prior thereto.

For extracting the syllable parts from the phonemically classified symbols, various processes are carried out such as the processing of voiceless periods, the processing of noise part, the division of vowel and consonant parts in boundaries between the syllables.

In addition to the above processing, it is necessary to smooth symbol levels as the phonemically classified symbols tend to appear unstably dependent on the feature parameters used in syllable classification and on the manner of syllable classification. As the speed of utterance is increased, there are sometimes occasions in which syllable parts cannot be extracted unambiguously with only the series of phonemically classified symbols. When this happens, it is necessary to use additional information such as for example time-dependent changes in spectrum and recesses (hereinafter referred to as "power dips") in time-dependent power patterns.

Fig. 2 shows in block form a speech recognition system embodying the present invention.

As shown in Fig. 2, an utterance picked up by a microphone (not shown) is fed through an amplifier and a preemphasis circuit (both not shown), sampled and then converted into a digital signal through A/D conversion.

The quantized digital signal is delivered through a terminal 1 to a speech analyzer 2.

The speech analyzer 2 determines at constant time intervals (in the range of from few units of milliseconds to tens of milliseconds) values of parameters for obtaining general features of the utterance and values of parameters forming syllable patterns (such as parameters values generated by a linear predictive analysis and parameters values representative of a spectrum). The parameters forming syllable patterns are stored in a pattern memory 3.

Based on the foregoing parameters, a phonemic classifier 5 effects phonemic classification at constant time intervals and issues a series of phonemically classified symbols as described above. A syllable extractor 6 is responsive to the symbol to detect the starting and terminal points of the syllables in the manner described with reference to Fig. 1, and issues addresses in the pattern memory 3 to a pattern generator 4.

The pattern generator 4 serves to generate a pattern by compressing or smoothing out on a time basis the syllabic pattern selected in the pattern memory 3. During speech registration through the inputting of standard speech, the patterns are stored in a standard pattern memory 7 through the route illustrated by the broken line in Fig. 2.

When an utterance to be recognized is entered, a pattern generated by the pattern generator 4 is delivered to a matching unit 8 which computes the distance and matching likelihood for the pattern from the pattern generator 4 with respect to each standard pattern stored in the standard pattern memory 7. One example of such a distance is the euclidean distance

$$D = \sum_{j}^{J} \sum_{i}^{I} (Xij - Yij)^2.$$

The pattern is composed of I frames of data and comprises an IJ dimensional vector constituted of J frames. (Xij) denotes an unknown pattern entered, and (Yij) denotes one of the standard patterns, (Xij) and (Yij) being normalized with respect to time in the J frames.

Other distances subjected to various processes such as the one using DP matching may also be employed.

A discriminator 9 determines which standard pattern is best approximated by the input unknown pattern based on the foregoing values of distance and likelihood, and delivers the result of the discrimination to an output unit 10.

There are normally a plurality of standard patterns present for a certain syllable. As a measure of similarity for a syllable, the average distance and likelihood with respect to each of the plurality of standard patterns may be used, or alternatively the distance and likelihood with respect to the standard pattern to which the entered pattern is most similar may be employed.

Where spectra changes and power sips are both used as additional information, these quantities should be computed in the speech analyzer 2 or the syllable extractor 6 while storing the parameters of a frame prior to or frames prior and subsequent to a frame under consideration, since the quantities are composed of information between frames.

The quantities indicative of spectrum variations may comprise, for example, a cepstrum coefficient, a parameter obtained by the linear predictive analysis and a time-dependent change in the output from a filter bank. The power dip may be indicated by the presence or absence of the minimal value in the time-dependent change of the power of a processed waveform such as a power or difference in a certain frequency band. The spectrum variation or power dip information can be utilized for example for detecting the starting point of a syllable composed of a number of successive voiced frames (the phonemically classified symbols: N, M, V) with no starting point detected prior to the successive voiced frames.

A method of syllable extraction embodying the present invention will be described.

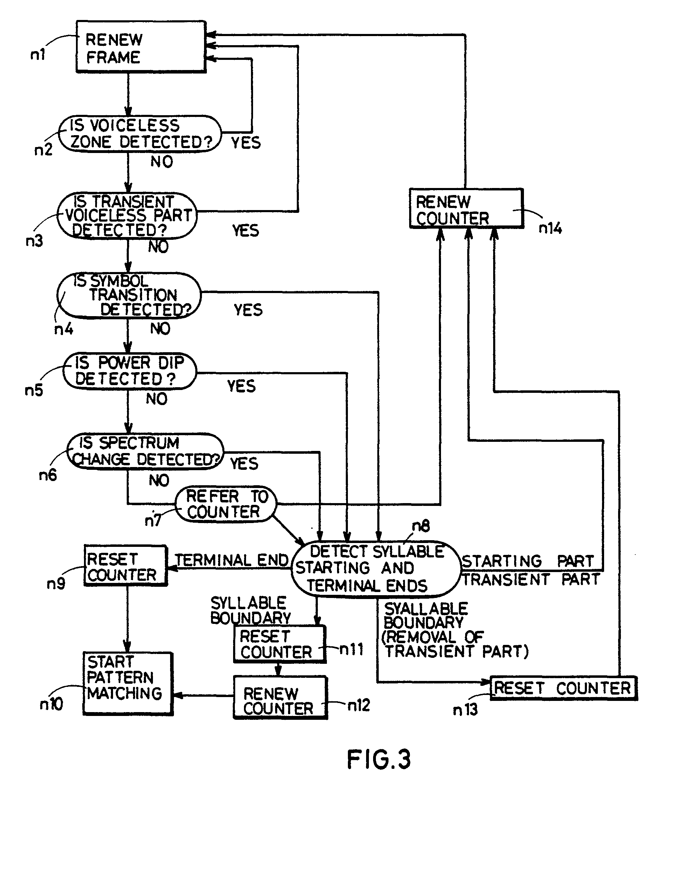

Fig. 3 is a flowchart illustrative of such a syllable extraction method.

For the brevity of illustration, the phonemically classified symbols set forth in the Table 1 are grouped into four symbols: ·, C, N, V. The symbol · is representative of voiceless parts including the symbols · and B; the symbol C of fricative parts including the symbols C and F, the symbol N of nasal parts, and the symbol V of vowel parts including M and V.

The following Table 2 uses the above series of phonemically classified symbols.

TABLE 2

| Zone | Series of phonemically classified symbols |
|---|---|
| (a) | · · · · · · · · ⊡ · · · · · · · · |
| (b) | · · · · · · C̄ C ⊡ · V V V V V V |
| (c) | · · · C C C C C ⊡ · V V V V V V |
| (d) | · · · · · · · · |C| V V V V V V V |
| (e) | · · · · V V V V |N| N N N V V V V |
| (f) | V V V V V V V V |C| C C C C V V V |
| (g) | V V V V V V V V ⊡ · · · · · · · |
| (h) | V̲ V̲ V̲ V̲ V̲ N̲ N̲ N̲ |C| C C C C C V V |

The method of syllable extraction will be described with reference to the example given above.

A step $n_2$ in Fig. 3 detects whether a frame under consideration (the frames enclosed in rectangle in the Table 2) and its previous frame are indicated by ·. If the frame is in the voiceless zone, no succeeding processes are carried out and the program goes back to step $n_1$ in which the frame under consideration is renewed and the next frame will be processed. Step $n_3$ detects whether the frame under consideration is a voiceless part (few frames) subsequent to a plosive part (at (b) in the Table 2, a plosive part detected is indicated by the sign — above the symbol) or a fricative part (at (c) in the Table 2). If the frame is in a transient voiceless part, then no succeeding process is performed and the program returns to the step $n_1$ in which the frame under consideration is renewed and the next frame will be processed. Since no counter renewal (described later) is effected at this time, the feature vector of the transient voiceless part will not be contained in the pattern of the syllable. Thus, a pattern is generated with the transient voiceless part neglected.

Step $n_4$ detects whether the phonemically classified symbol has changed on a time basis. For example, Table 2 indicates at (d) a change from a voiceless zone to a voiced zone (considered to be the starting point of a syllable) across the frame now under consideration. If the symbol change is detected, then the program goes to step $n_8$ in which a syllable end is detected. For (e), (f), (g) in the Table 2, the symbols are also regarded as having varied, and the program proceeds to the step $n_8$.

Step $n_5$ detects whether the frame under consideration is subjected to a minimum power level as compared with frames immediately prior and subsequent to the frame under consideration. The power dips include those varying gradually in time and those varying quickly in time, and various power dips can therefore be employed also dependent on which power is used. Powers used include the power of a particular frequency band, the power of a pre-emphasized waveform (with high- or low-frequency ranges emphasized), and others. Such various powers can also be used in combination for discrimination purpose. The power dips include deep and shallow ones. Therefore, when a power dip exceeds a certain threshold, the step $n_8$ uses the depth of the power dip, information as to how steep the power dip is, and information indicating which power is used, for detecting an end of a syllable.

Step $n_6$ detects spectrum changes by using various data such as information as to how quick the spectrum changes, how intense the spectrum is, physical quantities representative of a spectrum change, and combinations of such data. The physical quantities indicating a spectrum change include time-dependent changes such as an autocorrelation coefficient, a cepstrum coefficient, and parameters obtained in the linear predictive analysis (such as an α parameter, a k parameter and the like), and time-dependent variations in the filter bank output. These changes may be given as the distance between frames spaced by a time interval ranging from over ten milliseconds to tens of milliseconds according to the following formula:

$$\sum_{j=1}^{J} \sum_{i=1}^{I} (Cij - Cij + k)^2$$

where the parameter Cij is the cepstrum coefficient, i the degree, j the frame number, I the maximum degree of the cepstrum coefficient, J the frame number for computing the change, and k the time interval for finding the change. Thus, the formula indicates the euclidean distance of the pattern spaced between the J frames by the k frames.

The syllable starting point detection effected by the step $n_8$ divides the utterance into the following five

6

states based on the above phonemically divided symbol series, the power dip information, and the spectrum change information: (1) Starting end portion (see (d) in the Table 2), (2) Transient portion (see (e) in the Table 2), (3) Boundary between syllables (see (f) in the Table 2), (4) Terminal portion (see (g) in the Table 2), and (5) Removal of transient portion at syllable boundary (see (h) in the Table 2). The example given in the Table 2 however illustrates changes in the phonemically classified symbols only. In the status (5), the frames underscored lightly have already been extracted as a syllable part and completed pattern matching, and those underscored with a thicker line appear as a transient portion. When counters (described later) are reset under this condition, the frames underscored with the thicker line are excluded (see (h) in the Table 2).

The counter serves to count the symbols ·, C, N, V and the frames from the starting point of the syllable. In the status (2) (see (e) in the Table 2), a symbol change between voiced frames is detected in a few frames subsequent to an apparent syllabic starting point characterized by a change from a voiceless zone to a voiced zone. In this instance, the frame now under consideration cannot be regarded as a syllabic starting point, and the processing goes on to following frames. At this time, the counters for the voiced sounds N, V are referred to in step $n_7$. For the example (c) in the Table 2, only the counter for the symbol C and the counter for the frame number have their counts, and the unvoiced frame now under consideration can be regarded as a transient voiceless part in a syllable. In this manner, judgment can be made while referring to the contents of the counters in each detecting step shown in Fig. 3.

There are instances wherein the series of phonemically classified symbols is arranged irregularly, and a syllable boundary is present in a series of the same symbols. The syllabic starting point detecting step detects whether it is a syllable boundary by referring to the counter contents while using information such as a power dip and a spectrum variation. If the frame number exceeds a certain threshold with no symbol change, no power dip, and no spectrum change being detected, the program can go to the step $n_8$ for the detection of a syllabic starting point by referring to the counter contents.

The phonemic classifier 5 is capable of classifying the frames not only with the general features of a speech spectrum, but also with more specific information. For example, it may use information providing a feature vector composed of parameters used as feature parameters of each frame which is used in forming syllable patterns for pattern matching. Where cepstrum coefficients up to 24th are used as parameters, the feature vector is the 24th vector which can express the features of the frames.

Feature vectors are collected corresponding to vowel parts in syllable patterns which have been obtained in advance from speech input for registration and standard feature vectors of respective vowels /a/, /i/, /u/, /e/, /o/ are generated. These standard feature vectors will hereinafter be called "phoneme standard patterns". The phoneme standard patterns may be generated in various ways. For example, a phoneme standard pattern for /a/ can be produced by collecting and averaging the feature vectors of vowel parts of syllable patterns having vowels /a/, or several phoneme standard patterns for /a/ can be prepared by clustering. A series of phoneme symbols can thus be obtained by matching phoneme standard patterns previously prepared with feature vectors of respective frames of input speech to determine which phoneme standard pattern is most closely approximated by the feature vector of each frame. Therefore, more detailed information can be obtained by utilizing the phoneme symbol series and the matching distance with respect to the phoneme standard patterns.

Phoneme standard patterns can be prepared corresponding not only to five vowels but also other phonemes. For instance, phoneme standard patterns for nasals and fricatives can be prepared by collecting the feature vectors of consonant parts of nasals and fricatives marked with the nasal symbol N and fricative symbol F (see the Table 1) according to the phonemic classification, thus generating consonant phoneme standard patterns similar to vowel phoneme standard patterns.

It is also possible to collect phoneme standard patterns from a multiplicity of speakers and prepare several phoneme standard patterns for each phoneme by way of clustering. By using these phoneme standard patterns, it is rendered possible to label frames with symbols for unspecified speakers. Since the phonemically classified symbols (see the Table 1) are independent of speakers, symbol labelling applicable to unspecified speakers can be made through matching with phoneme standard patterns for unspecified speakers. Phoneme standard patterns can also be prepared for certain groups of speakers; for example, male speakers, female speakers, child speakers, aged speakers, and the like.

The phonemic classifier can thus extract detailed phonemic features for labelling the frames with symbols by using not only phonemic standard patterns but also using other information.

The phonemic classifier effects symbol labelling for each frame, but can be improved by employing information prior and subsequent to the frame under consideration. This can not only perform smoothing, but also utilize time-dependent change features.

For example, when /aia/ is uttered slowly, a series of phoneme symbols appear like

AAAAAAAAAEEEEIIIIIIEEEEEAAAAAAAAAAAAA

and when the same is uttered more quickly, the phoneme symbol series

AAAAAAAAAAAAEEEEEEEEEAAAAAAAAAAAA

7

appears. The distance to the phoneme standard pattern of /i/ may be minimum at the position of EEEE . . ., and this can be utilized to rewrite the symbol E as the symbol I for correcting the series into a series marked with symbols corresponding to the utterance which is actually heard.

In certain instances, it is better for the program to proceed from the symbol transition detection in the step $n_4$ of Fig. 3 to the syllabic starting point detecting step when a suitable position as a syllabic starting point is assured, rather than going to the syllabic starting point detecting step only upon detection of a symbol transition. For example, when /iya/ is uttered, the vowel phoneme symbol series appears in many occasions as

$$\overset{*}{\text{IIIIIIIIIIIIIIIEEEEAAAAAAAAAAAAAA.}}$$

The recognition performance is sometimes greater when the frame marked with * is regarded as a starting point than when a point of change from I to E is regarded as a starting point. Consequently the program can go to the syllabic starting point detecting step from that frame with the symbol transition being regarded as detected.

Where the more detailed symbol series is employed, therefore, the symbol transition detection not only contains symbol change detection, but also has a function including syllable boundary detection, for improved performance.

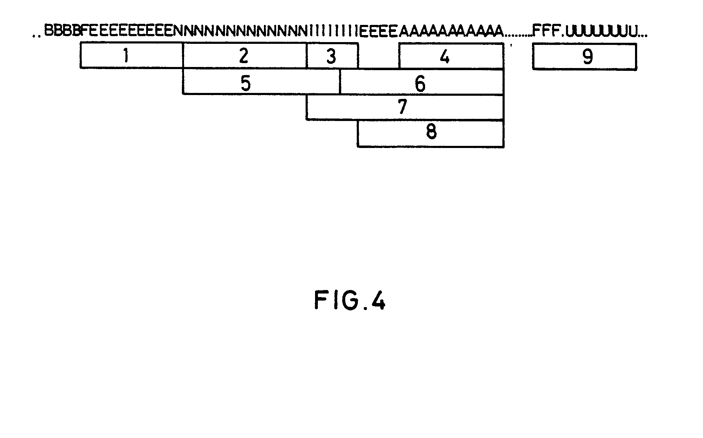

In the foregoing embodiment, the starting and terminal points of a syllable part are determined uniquely. In actual continuous speech, however, there are frequently several candidates for the times of the starting and terminal points in a certain interval of time. Fig. 4 shows an example of a series of symbols obtained when "DENYAKUKI" (meaning "electronic translator") is uttered, the view showing a portion of such symbols. Rectangles below the symbol series are representative of an instance in which candidate zones for syllables are determined without using information on spectrum changes and power dips. Assuming that between N and A, there are obtained candidate zones as indicated by numbers in the rectangles (2, 3, 4), (2, 3, 8), (2, 6), (2, 7), (2, 8), (5, 4), (5, 6), and the like are attained as candidates for syllable zones in the series. Let the results (first candidate) of pattern matching between the patterns for the zone candidates from 1 to 9 be de(1), n(2), i(3), a(4), ni(5), ya(6), ya(7), ya(8), ku(9), (the numbers in the parentheses are the numbers of the illustrated syllable zone candidates). If ki(10) (not shown) is obtained, the syllable series for each syllable zone, using these first candidates, are DENIAKUKI, DENIYAKUKI, DENYAKUKI, DENIAKUKI, and DENIYAKUKI. When the present system is employed for word recognition, and of above syllable series only "denyakuki" is contained among the words registered in the word dictionary (the other alternative syllable series are not in general use), the result of recognition becomes "DENYAKUKI".

With the system as described above, · feature parameters are extracted from a speech waveform, · phonemic features of an utterance are determined from the parameters to encode segments of the speech waveform, and the starting and terminal points of a syllable part are determined from the time series of the encoded segments, thereby extracting the syllable. Therefore, the syllable part can accurately be extracted thereby improving the performance of recognition of continuously uttered sounds.

## Claims

1. A method of speech recognition in which:

an input word comprising two or more syllables is divided into a series of frames having a predetermined frame interval;

frames from the input word are classified according to phonemic features;

the input word is divided into syllables by use, at least in part, of the said classification of frames according to phonemic features; and

speech waveform feature patterns for the syllables of the input word are compared with stored patterns for syllables in order to match the said syllables of the input word thereby to recognise the input word,

characterised in that

in the said classification, frames from both vowel parts and consonant parts of the input word are classified, and are given classifications selected from classifications relating to both vowels and consonants

and in that the said syllables into which the input word is divided are CV syllables which each comprise one consonant and one vowel.

2. A method according to claim 1 in which dips in the power of the input word and changes in the spectrum of the input word are also used in dividing the word into syllables.

3. A method according to claim 1 or claim 2 in which the said classification according to phonemic features distinguishes at least between voiceless, nasal, vowel and fricative sounds in classifying a frame.

4. A method according to any preceding claim, in which the beginnings and ends of the syllables are established in accordance with the classification sequence of said series of frames.

5. A method according to claim 4, in which the transition from one said classification to another in successive frames is detected, and the beginnings and ends of the syllables are established using the result of such detection.

6. A method according to any preceding claim, in which for the purposes of syllable division, frames classified as transient voiceless are ignored.

7. A method according to any preceding claim, in which the phonemic classification of a given frame is performed with reference to the previous and subsequent frames.

8. A method according to any preceding claim, in which the frame classification includes classification into different vowels.

9. A method according to any preceding claim, in which a plurality of candidate forms of syllable division is produced for an input word, and for each candidate form a corresponding candidate word spelling is compared with registered word spellings in a word dictionary, and a single said registered word spelling is selected as the recognized match to said input word.

10. A speech recognition system, comprising
means (2) for dividing an input spoken word into frames having a predetermined frame interval,
means (5) for classifying the frames from the input word according the phonemic features,
means (6) for dividing the input word into syllables by use, at least in part, of the said classification of frames according to phonemic features, and
means (8) for comparing speech waveform feature patterns for the syllables of the input word with stored patterns for syllables in order to match the said syllables of the input thereby to recognise the input spoken word,
characterised in that
said means for classifying (5) is adapted to classify frames from both vowel parts and consonant parts of the input word, and to give said frames classification selected from classifications relating to both vowels and consonants,
and in that
the said syllables into which the input word is divided are CV syllables which each comprise one consonant and one vowel.

11. A system according to claim 10 in which said means for dividing into syllables (6) is adapted also to use dips in the power of the input word and changes in the spectrum of the input word in dividing the word into syllables.

12. A system according to claim 10 or claim 11 in which said means for classifying (5) is adapted to distinguish at least between voiceless, nasal, vowel and fricative sounds in classifying a frame.

13. A system according to any of claims 10 to 12 in which said means for dividing into syllables (6) is adapted to establish the beginnings and ends of the syllables in accordance with the classification sequence of said series of frames.

14. A system according to claim 13 in which said means for dividing into syllables (6) includes means for detecting the transition from one said classification to another in successive frames, and means for establishing the beginnings and ends of the syllables using the result of such detection.

15. A system according to any of claims 10 to 14 in which for the purposes of syllable division, said means for dividing into syllables (6) is adapted to ignore frames classified as transient voiceless.

16. A system according to any of claims 10 to 15 in which said classifying means (5) is adapted to perform the phonemic classification of a given frame with reference to the previous and subsequent frames.

17. A system according to any of claims 10 to 16 in which the classifying means (5) is adapted to classify into different vowels.

18. A system according to any of claims 10 to 17 in which said means for dividing into syllables (6) is adapted to produce a plurality of candidate forms of syllable division for an input word, and said means for comparing (8) is operable for each candidate form to compare a corresponding candidate word spelling with registered word spellings in a word dictionary, and to select a single said registered word spelling as the recognized match to said input word.

**Patentansprüche**

1. Verfahren zur Spracherkennung, bei dem
—ein aus zwei oder mehr Silben bestehendes, Eingabewort in eine Serie von Abschnitten mit einem bestimmten Intervall eingeteilt wird;
—die Abschnitte des Eingabeworts entsprechend ihrer phonetischen Eigenschaften klas sifiziert werden;
—das Eingabewort unter mindestens teilweiser Verwendung der Klassifikation der Abschnitte entsprechend der phonetischen Eigenschaften in Silben aufgeteilt wird; und die Kennzeichen der Wellenform der Sprachmuster von Silben der Eingabeworte mit gespeicherten Mustern von Silben zum Angleichen der Silben und zum Erkennen des Eingabeworts verglichen werden, dadurch gekennzeichnet, daß
—bei der Klassifikation Abschnitte sowohl der Vokalteile aus auch der Konsonantenteile des

**0 109 140**

Eingabeworts klassifiziert bzw. Klassen zugeordnet werden, die sich sowohl auf Vonkale als auch auf Konsonanten beziehen, und

—die Silben, in die das Eingabewort aufgeteilt wird, sogenannte CV-Silben sind, die je weils einen Konsonanten und einen Vokal aufweisen.

2. Verfahren nach Anspruch 1, dadurch gekennzeichnet, daß Bereiche mit geringer Leistung bzw. Leistungsdichte des Eingabeworts und Veränderungen in seinem Spektrum ebenfalls bei der Aufteilung des Worts in Silben herangezogen werden.

3. Verfahren nach Anspruch 1 oder 2, dadurch gekennzeichnet, daß bei der Klassifikation eines Abschnitts nach phonetischen Kennzeichen mindestens zwischen stimmlosen Lauten, nasalen Lauten, Vokalen und Reiblauten unterschieden wird.

4. Verfahren nach einem der vorhergehenden Ansprüche, dadurch gekennzeichnet, daß Anfang und Ende der Silben in Übereinstimmung mit der Klassifikationsfolge der Anzahl von Intervallen festgelegt werden.

5. Verfahren nach Anspruch 4, dadurch gekennzeichnet, daß der Übergang von einer Klassifikation zu einer anderen bei aufeinanderfolgenden Abschnitten festgestellt wird und Anfang und Ende der Silben unter Verwendung des Ergebnisses dieser Feststellung aufgezeichnet werden.

6. Verfahren nach einem der vorhergehenden Ansprüche, dadurch gekennzeichnet, daß zum Zwecke der Silbenteilung die als übergangs-stimmlos klassifizierten Abschnitte vernachlässigt werden.

7. Verfahren nach einem der vorhergehenden Ansprüche, dadurch gekennzeichnet, daß die phonetische Klassifikation eines gegebenen Abschnittes mit Bezug auf einen vorhergehenden und einen nachfolgenden Abschnitt ausgeführt wird.

8. Verfahren nach einem der vorhergehenden Ansprüche, dadurch gekennzeichnet, daß die Klassifikation der Abschnitte eine Klassifikation in verschiedene Vokale beinhaltet.

9. Verfahren nach einem der vorhergehenden Ansprüche, dadurch gekennzeichnet, daß für ein eingegebenes Wort eine Mehrzal von möglichen Formen der Silbenteilung gebildet wird und für jede mögliche Form eine entsprechende Wortbuchstabierung mit einer in einem Wörterbuch gespeicherten Wortbuchstabierung verglichen wird, sowie eine der gespeicherten Wortbuchstabierungen als mit dem eingebenen Wort übereinstimmend erkannt und ausgewählt wird.

10. Spracherkennungssystem mit:

einer Vorrichtung (2) zur Aufteilung eines eingegebenen, gesprochenen Wortes in Abschnitte mit einer bestimmten Intervalllänge,

einer Vorrichtung (5) zur Klassifizierung der Abschnitte des eingegebenen Wortes entsprechend ihrer phonetischen Kennzeichen,

einer Vorrichtung (6) zur Aufteilung des eingegebenen Wortes in Silben unter mindestens teilweiser Verwendung der Klassifikation der Abschnitte entsprechend ihrer phenotischen Kennzeichen, und

einer Vorrichtung (8) zum Vergleich der Wellenformkennzeichen der Sprachmuster der Silben des eingegebenen Wortes mit gespeicherten Silbenmustern, so daß durch Anpassung das eingegebene, gesprochene Wort erkannt wird, dadurch gekennzeichnet, daß

—die Vorrichtung (5) zur Klassifizierung sowohl zur Klassifizierung von Abschnitten mit Vokal- als auch mit Konsonantteilen des eingegebenen Wortes geeignet ist und diese aus der Vokal- und Konsonantenklassifikation ausgewählte Abschnittsklassifikation ausgibt, und

—die Silben, in die das eingegebenen Wort aufgeteilt wird, CV-Silben sind, die jeweils einen Konsonanten und einen Vokal aufweisen.

11. System nach Anspruch 10, dadurch gekennzeichnet, daß die Vorrichtung (6) zur Aufteilung in Silben auch zur Auswertung von Leistungslücken in dem eingegebenen Wort und Veränderungen seines Spektrums geeignet ist.

12. System nach einem der Ansprüche 10 oder 11, dadurch gekennzeichnet, daß die Vorrichtung (5) zur Klassifizierung zur Unterscheidung mindestens zwischen stimmlosen Lauten, nasalen Lauten, Vokalen und Reibungslauten bei Klassifizierung eines Abschnittes geeignet ist.

13. System nach einem der Ansprüche 10 bis 12, dadurch gekennzeichnet, daß die Vorrichtung (6) zur Aufteilung in Silben zur Festlegung des Anfangs und Endes der Silben entsprechend der Klassifikationsreihenfolge der Abschnitte geeignet ist.

14. System nach Anspruch 13, dadurch gekennzeichnet, daß die Vorrichtung (6) zur Aufteilung in Silben Vorrichtungen zur Erfassung des Übergangs von einer Klassifikation zu einer anderen bei aufeinanderfolgenden Abschnitten, sowie Vorrichtungen zur Festlegung des Anfangs und Endes der Silben unter Verwendung des Ergebnisses dieser Erfassung aufweist.

15. System nach einem der Ansprüche 10 bis 14, dadurch gekennzeichnet, daß zum Zwecke der Aufteilung in Silben die zugehörige Vorrichtung (6) so ausgelegt ist, daß Abschnitte, die als stimmlose Übergangsabschnitte kassifiziert sind, vernachlässigt werden.

16. System nach einem der Ansprüche 10 bis 15, dadurch gekennzeichnet, daß die Vorrichtung (5) für die phonetische Klassifikation eines gegebenen Abschnittes zur Klassifizierung mit Bezug auf die vorhergehenden und nachfolgenden Abschnitte ausgelegt ist.

17. System nach einem der Ansprüche 10 bis 16, dadurch gekennzeichnet, daß die Klassifiziervorrichtung (5) zur Klassifizierung nach verschiedenen Vokalen eingerichtet ist.

18. System nach einem der Ansprüche 10 bis 17, dadurch gekennzeichnet, daß die Vorrichtung (6) zur

**0 109 140**

Aufteilung in Silben zur Erzeugung einer Mehrzahl von möglichen Formen der Silbenaufteilung eines Eingabewortes ausgelegt ist und die Vergleichsvorrichtung (8) für jede mögliche Form eine entsprechende mögliche Wortbuchstabierung mit einer in einem Wörterbuch gespeicherten Wortbuchstabierung vergleicht und eine der gespeicherten Wortbuchstabierungen als die mit dem Eingabewort übereinstimmende erkennt und auswählt.

## Revendications

1. Procédé de reconnaissance de la parole, selon lequel:
on subdivise un mot d'entrée comprenant deux ou plusieurs syllabes en une série de blocs s'étendant sur un intervalle de temps prédéterminé;
on classe les blocs obtenus à partir du mot d'entrée conformément à des caractéristiques phonémiques;
on subdivise le mot d'entrée en syllabes en utilisant, au moins en partie, ladite classification des blocs conformément aux caractéristiques phonémiques; et
on compare les formes caractéristiques des formes d'ondes de la parole pour les syllabes du mot d'entrée à des formes mémorisées pour des syllabes pour établir une correspondance avec lesdites syllabes du mot d'entrée de manière à identifier ce dernier,
caractérisé en ce que
dans ladite classification, on classe les blocs provenant à la fois des parties formant voyelles et des parties formant consonnes du mot d'entrée, et on donne auxdits blocs une classification sélectionnée parmi des classifications associées à la fois à des voyelles et à des consonnes,
et en ce que lesdites syllabes, en lesquelles le mot d'entrée est subdivisé, sont des syllabes CV qui comportent chacune une consonne et une voyelle.

2. Procédé selon la revendication 1, dans lequel on utilise également des baisses de la puissance du mot d'entrée et des variations dans le spectre du mot d'entrée pour subdiviser le mot en syllabes.

3. Procédé selon la revendication 1 ou 2, selon lequel ladite classification conforme aux caractéristiques phonémiques établit une distinction entre au moins des sons non voisés, des sons nasaux, des sons de voyelles, et des sons sifflants lors de la classification d'un bloc.

4. Procédé selon l'une quelconque des revendications précédentes, selon lequel on détermine les débuts et les fins des syllabes conformément à la séquence de classification de ladite série de blocs.

5. Procédé selon la revendication 4, selon lequel on détecte la transition depuis l'une desdites classifications à une autre dans des blocs successifs et on détermine les débuts et les fins des syllabes en utilisant le résultat d'une telle détection.

6. Procédé selon l'une quelconque des revendications précédentes, selon lequel pour réaliser la division en syllabes, on ignore les blocs classés en tant que blocs transitoires non voisés.

7. Procédé selon l'une quelconque des revendications précédentes, selon lequel la classification phonémique d'un bloc donné est réalisée en se référant à des blocs précédents et suivants.

8. Procédé selon l'une quelconque des revendications précédentes, selon lequel la classification des blocs inclut une classification en des voyelles différentes.

9. Procédé selon l'une quelconque des revendications précédentes, selon lequel on produit une pluralité de formes possibles de subdivision en syllabes pour un mot d'entrée et, pour chaque forme possible, on compare une épellation possible correspondante du mot à des épellations enregistrées de mots dans un dictionnaire de mots, et une seule épellation de mot enregistrés est sélectionnée en tant que mot reconnu correspondant auxdits mots d'entrée.

10. Système de reconnaissance de la parole, comprenant
des moyens (2) servant à subdiviser un mot parlé d'entrée en des blocs d'étendant sur un intervalle de temps prédéterminé,
des moyens (5) pour classer les blocs obtenus à partir du mot d'entrée conformément aux caractéristiques phonémiques,
des moyens (6) pour subdiviser le mot d'entrée en syllabes grâce à l'utilisation, au moins en partie, de ladite classification de blocs conformément à des caractéristiques phonémiques, et
des moyens (8) pour comparer les formes caractéristiques des formes d'ondes vocales pour les syllabes du mot d'entrée à des formes mémorisées pour des syllabes, afin d'obtenir une concordance pour lesdites syllabes du mot d'entrée pour reconnaître le mot d'entrée parlé,
caractérisé en ce que
lesdits moyens de classification (5) sont adaptés pour classer des blocs provenant à la fois de parties formant voyelles et de parties formant consonnes du mot d'entrée et pour donner auxdits blocs une classification sélectionnée parmi des classifications concernant à la fois des voyelles et des consonnes,
et en ce que lesdites syllabes, en lesquelles le mot d'entrée est subdivisé, sont des syllabes CV, qui comprennent chacune une consonne et une voyelle.

11. Système selon la revendication 10, dans lequel lesdits moyens servant à réaliser la subdivision en syllabes (6) sont également adaptés pour utiliser les baisses de la puissance du mot d'entrée et des variations du spectre du mot d'entrée pour la subdivision du mot en syllabes.

12. Système selon la revendication 10 ou 11, selon lequel lesdits moyens de classification (5) sont adaptés pour établir une distinction au moins entre des sons non voisés, des sons nasaux, des sons de voyelles et des sons sifflants lors de la classification d'un bloc.

13. Système selon l'une quelconque des revendications 10 à 12, dans lequel lesdits moyens pour réaliser la subdivision en syllabes (6) sont adaptés pour déterminer les débuts et les fins des syllabes conformément à la séquence de classification de ladite série de blocs.

14. Système selon la revendication 13, dans lequel lesdits moyens servant à réaliser la subdivision en syllabes (6) incluent des moyens pour détecter la transition depuis l'une desdites classifications en une autre classification dans des blocs successifs, et des moyens pour déterminer les débuts et les fins des syllabes en utilisant le résultat d'une telle détection.

15. Système selon l'une quelconque des revendications 10 à 14, selon lequel pour réaliser la subdivision en syllabes, lesdits moyens réalisant la subdivision en syllabes (6) sont adaptés pour ignorer les blocs classés comme blocs transitoires non voisés.

16. Système selon l'une quelconque des revendications 10 à 15, dans lequel lesdits moyens de classification (5) sont adaptés pour réaliser la classification phonémique d'un bloc donné en référence aux blocs précédentes et suivants.

17. Système selon l'une quelconque des revendications 10 à 16, dans lequel les moyens de classification (5) sont adaptés pour réaliser une classification en différentes voyelles.

18. Système selon l'une quelconque des revendications 10 à 17, dans lequel lesdits moyens servant à réaliser une subdivision en syllabes (6) sont adaptés pour produire une pluralité de formes possibles de la la subdivision en syllabes pour un mot d'entrée, et lesdits moyens de comparaison (8) peuvent agir pour chaque forme possible de manière à comparer une épellation correspondante de mots possibles à des épellations de mots enregistrées dans un dictionnaire de mots, et à sélectionner une seule épellation de mot enregistrée comme étant le mot reconnu correspondant audit mot d'entrée.

|← ——— ha ——— →|← ——— na ——— →| |← — ga — →|

·CCCF ···· CCFFFFF· VVVVVVVVMNNNNNMVVVVVVVVNBBBBBBFVVVVVVVV· ···

## FIG.1

SPEECH SIGNAL

```
              ○ ~1
        ┌─────────────┐~2
        │   SPEECH     │
        │  ANALYZER    │
        └─────────────┘
         │            │
         ▼            ▼
  ┌──────────┐~3  ┌──────────┐~5
  │ PATTERN  │    │ PHONEMIC │
  │ MEMORY   │    │CLASSIFIER│
  └──────────┘    └──────────┘
       │               │
       ▼               ▼
  ┌──────────┐~4  ┌──────────┐~6
  │ PATTERN  │◄───│ SYLLABLE │
  │GENERATOR │    │EXTRACTOR │
  └──────────┘    └──────────┘
   ┊      │
   ▼      ▼
┌────────┐ ┌──────────┐
│STANDARD│ │ MATCHING │
│PATTERN │→│  UNIT    │~8
│MEMORY  │~7└──────────┘
└────────┘      │
                ▼
         ┌────────────┐
         │DISCRIMINATOR│~9
         └────────────┘
                │
                ▼
         ┌────────────┐
         │OUTPUT UNIT │~10
         └────────────┘
```

## FIG.2

FIG.3

..BBBBFEEEEEEEEEENNNNNNNNNNNNNIIIIIIIIIEEEEAAAAAAAAAAA........FFF.UUUUUUUU...

| 1 | | 2 | 3 | 4 | | 9 |
|---|---|---|---|---|---|---|

|  | 5 |  | 6 | |
|---|---|---|---|---|

|  |  | 7 | | |
|---|---|---|---|---|

|  |  |  | 8 | |
|---|---|---|---|---|

# FIG.4